## Europäisches Patentamt

## European Patent Office

## Office européen des brevets

(19)

(11) Veröffentlichungsnummer: **0 226 002**
**B1**

(12)

# EUROPÄISCHE PATENTSCHRIFT

(45) Veröffentlichungstag der Patentschrift:
**01.03.89**

(21) Anmeldenummer: **86114917.7**

(22) Anmeldetag: **27.10.86**

(51) Int. Cl.⁴: **C08F 283/08**
**// (C08F283/08, 220:54)**

(54) **Modifizierte Polyphenylenetherharze mit Amidgruppen.**

(30) Priorität: **13.11.85 DE 3540117**

(43) Veröffentlichungstag der Anmeldung:
**24.06.87 Patentblatt 87/26**

(45) Bekanntmachung des Hinweises auf die Patenterteilung:
**01.03.89 Patentblatt 89/9**

(84) Benannte Vertragsstaaten:
**BE DE FR GB NL**

(56) Entgegenhaltungen:
**EP-A- 0 017 939**
**EP-A- 0 115 218**
**DE-A- 1 801 230**

(73) Patentinhaber: **BASF Aktiengesellschaft,**
**Carl-Bosch-Strasse 38, D-6700 Ludwigshafen(DE)**

(72) Erfinder: **Taubitz, Christof, Dr., In der Dreispitz 15,**
**D-6706 Wachenheim(DE)**
Erfinder: **Seiler, Erhard, Dr., Erpolzheimer Strasse 1,**
**D-6700 Ludwigshafen(DE)**
Erfinder: **Schlemmer, Lothar, Duisbergstrasse 1a,**
**D-6701 Maxdorf(DE)**

## Beschreibung

Die Erfindung betrifft ein Verfahren zur Herstellung von modifizierten Polyphenylenetherharzen durch Aufpfropfen einer olefinisch ungesättigten Verbindung auf Polyphenylenether.

Bei derartigen Polymeren handelt es sich um hochmolekulare Stoffe, bei denen auf bereits vorgebildeten Molekülketten, die durch Polykondensation gewonnen wurden, nachträglich Seitenketten aus olefinisch ungesättigten Verbindungen aufgepfropft werden.

Es ist bekannt, olefinisch ungesättigte Verbindungen in Gegenwart eines organischen Peroxids auf Polyphenylenether zu pfropfpolymerisieren (vgl. z.B. US-Patente 4 287 321, 4 460 743, 4 278 777 oder 4 486 568 sowie EP-A 54 140 oder 25 200). Aus der Druckschrift JP-AS 73/10397 ist es auch bereits bekannt, in Lösung auf eine Mischung aus Polyphenylenether und anderen Polymerisaten wie Polystyrol, Polyvinylchlorid, Polyethylen, Polypropylen etc. reaktive Vinylmonomere, unter denen auch das Acrylamid genannt ist, aufzupfropfen (vgl. Derwent Chem. Abstracts 19548 U-A). Hierzu wird beispielsweise eine Lösung aus Poly-(2,6-dimethyl-1,4-phenylen-)ether und Acrylnitril-Styrol-Copolymerisat in Xylol in Gegenwart von Tert.-butylperbenzoat bei 80°C innerhalb von 10 Stunden Styrol eingeleitet und die erhaltene Pfropfpolymerisatmischung mit Methanol ausgefällt.

Es ist ein Nachteil des bekannten Verfahrens, daß relativ lange Reaktionszeiten und die Gegenwart eines anderen Polymeren als Polyphenylenether in Kauf genommen werden müssen. Ein weiterer Nachteil ist darin zu sehen, daß stets Lösungsmittel entfernt werden muß.

Aufgabe der vorliegenden Erfindung war es, die oben beschriebenen Nachteile zu vermeiden und ein modifiziertes Polyphenylenetherharz mit Amidgruppen aufzufinden, das nicht mit anderen Pfropfpolymeren gemischt ist.

Die Aufgabe wurde durch ein Verfahren gemäß Patentansprüchen 1 bis 5 gelöst.

Die in den modifizierten Polyphenylenetherharzen enthaltenen Polyphenylenether werden nach bekannten Verfahren aus in ortho-Position durch Alkylgruppen disubstituierten Phenolen durch oxidative Kupplung hergestellt (vgl. US-Patente 3 661 848, 3 219 625, 3 378 505, 3 306 874, 3 306 875 und 3 639 656).

Geeignete Polyphenylenether sind beispielsweise Poly(2,6-diethyl-1,4-phenylen)-ether, Poly(2-methyl-6-ethyl-1,4-phenylen)-ether, Poly(2-methyl-6-propyl-1,4-phenylen)-ether, Poly(2,6-dipropyl-1,4-phenylen)ether, Poly(2-ethyl-6-propyl-1,4-phenylen)-ether oder Copolymere, wie solche, die 2,3,6-Trimethylphenol enthalten, außerdem Polymermischungen. Besonders bevorzugt ist jedoch Poly(2,6-dimethyl-1,4-phenylen)-ether.

Die Polyphenylenether sind im allgemeinen hochmolekular. Das Molekulargewicht aus dem Gewichtsmittel ($M_w$) beträgt bevorzugt 10.000 bis 80.000, im besonderen 15.000 bis 60.000.

Bei den olefinisch ungesättigten Verbindungen handelt es sich um Amide, die polymerisierbare Doppelbindungen enthalten. Bevorzugt sind (Meth)acrylamid, N-Alkyl(meth)acrylamid, N,N-Dialkyl(meth)acrylamid mit $C_1$- bis $C_8$-Alkylgruppen.

Die Amidkomponente wird im allgemeinen in Mengen von 0,1 bis 10 Gew.-Teilen, vorzugsweise über 0,5 Gew.-Teilen, pfropfpolymerisiert.

Neben dem Amid oder den Amidgemischen können gegebenenfalls weitere, auf den Polyphenylenether pfropfpolymerisierbare Monomere mit olefinischen Doppelbindungen eingesetzt werden.

Die Amidkomponente wird gegebenenfalls in Gegenwart eines Radikalstarters, der bevorzugt ein organisches Peroxid oder eine Azoverbindung ist, pfropfpolymerisiert. Bevorzugt ist jedoch ein Verfahren, bei dem ohne Zusatz eines Radikalstarters pfropfpolymerisiert wird. Solche Radikalstarter sind dem Fachmann bekannt.

Beispielhaft seien genannt: 1,1-Di-tert-butyl-peroxy-3,3,5-trimethylcyclohexan, Tert-butyl-peroxy-isopropylcarbonate, Tert-butyl-peroxy-3,3,5-trimethylhexoate, Tert-butyl-peracetat, Tert-butyl-perbenzoat, 4,4-Di-tert-butyl-peroxy-valeriansäure-n-butylester, 2,2-Di-tert-butyl-peroxy-butan, Di-cumyl-peroxid, Tert-butyl-cumyl-peroxid, 1,3-Bis(tert-butyl-peroxy-isopropyl)benzol und Di-tert-butylperoxid.

Besonders bevorzugt sind organische Peroxide mit einer Halbwertszeit des Zerfalls [vgl. Modern Plastics 36, [1959], [6], Seiten 142 bis 148] bei 200°C von 1 bis 30 Sekunden. Die Wahl des Radikalstarters richtet sich nach der gewünschten Reaktionstemperatur.

Der Starter wird bei einer Reaktionstemperatur von über 250°C bei ausreichender Reaktionsdauer beispielsweise in der Schmelze fehlen, gegebenenfalls ist er in Mengen unter 10 Gew.-%, bevorzugt unter 5 Gew.-% anwesend.

Die Amide werden in der Schmelze pfropfpolymerisiert.

Die Komponenten werden in der Schmelze des Polyphenylenethers bei Temperaturen von 230 bis 350°C, vorzugsweise zwischen 240 und 300°C innig vermischt, wobei gegebenenfalls der Schmelzpunkt des Polyphenylenethers durch Zusätze variiert werden kann. Vorzugsweise verwendet man dafür einen Zweischneckenextruder.

Die Verweilzeit beträgt im allgemeinen 0,5 bis 10 Minuten, bevorzugt 1 bis 5 Minuten.

Die Komponenten werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielfältig verwendbar.

Die erfindungsgemäßen modifizierten Harze können in der üblichen Weise modifiziert werden. Sie können daher z.B. Verstärkungs- und Füllstoffe, insbesondere Glasfasern, Flammschutzmittel, Stabilisatoren, Gleit- und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Die erfindungsgemäßen Harze können als Haftmittler eingesetzt werden. Sie eignen sich auch als Werkstoffe, Folien, dünne Haftschichten, Schmelzkleber und Beschichtungen.

Beispiel

98 Gew.-Teile Poly-(2,6-dimethyl-1,4-phenylen)-ether (= PPE) mit einer relativen Viskosität von 0,61, gemessen in 1 gew.-%iger CHCl₃-Lösung bei 25°C, und 2 Gew.-Teile Methacrylamid werden in einem Zweischneckenextruder (ZSK 53) der Firma Werner und Pfleiderer dosiert und in einem ersten Teil unter Verwendung von Knetelementen bei 270°C aufgeschmolzen, anschließend in einem zweiten Teil unter Kneten und Verwendung von zurückfördernden Knetelementen bei 270°C umgesetzt und anschließend in einer Entgasungszone bei 280°C durch Anlegen von Vakuum entgast. Die mittlere Verweilzeit im Extruder beträgt 3 Minuten. Die austretende Schmelze wird durch ein Wasserbad geleitet, granuliert und getrocknet. Das Granulat ist zu 5 Gew.-% in Toluol unlöslich. Man preßt einen Film und bestimmt IR-spektroskopisch den Methacrylamidgehalt mit 1,2 Gew.-% im modifizierten Polyphenylenetherharz.

Patentansprüche

1. Verfahren zur Herstellung von modifizierten Polyphenylenetherharzen durch Aufpfropfen einer olefinisch ungesättigten Verbindung auf Polyphenylenether, dadurch gekennzeichnet, daß ein organisches Amid, welches eine polymerisierbare Doppelbindung enthält, oberhalb der Schmelztemperatur des Polyphenylenethers auf den Polyphenylenether, gegebenenfalls in Gegenwart von Radikalstartern, pfropfpolymerisiert wird.

2. Verfahren nach Anspruch 1, dadurch gekennzeichnet, daß das organische Amid ein (Meth)acrylamid, N-Methyl(meth)acrylamid oder N,N-Dialkyl(meth)acrylamid mit C₁- bis C₈-Alkylgruppen ist.

3. Verfahren nach Anspruch 1, dadurch gekennzeichnet, daß bei Temperaturen zwischen 230 und 350°C pfropfpolymerisiert wird.

4. Verfahren nach Anspruch 1, dadurch gekennzeichnet, daß ohne Zusatz eines Radikalstarters pfropfpolymerisiert wird.

5. Verfahren nach Anspruch 1, dadurch gekennzeichnet, daß die Pfropfpolymerisation in einer mit Knetelementen versehenen Reaktionszone einer Extruderschnecke erfolgt.

**Claims**

1. A process for preparing a modified polyphenylene ether resin by grafting a polyphenylene ether with an olefinically unsaturated compound, which comprises graft-polymerizing an organic amide containing a polymerizable double bond onto the polyphenylene ether at above the melting point of the polyphenylene ether in the presence or absence of a free radical initiator.

2. A process as claimed in claim 1, wherein the organic amide is a (meth)acrylamide, N-methyl-(meth)acrylamide or N,N-dialkyl(meth)acrylamide with from C₁ to C₈-alkyl groups.

3. A process as claimed in claim 1, wherein the graft polymerization is carried out at from 230 to 350°C.

4. A process as claimed in claim 1, wherein the graft polymerization is carried out in the absence of a free radical initiator.

5. A process as claimed in claim 1, wherein the graft polymerization is carried out in an extruder screw in a reaction zone equipped with a kneading element.

**Revendications**

1. Procédé de préparation de résines de poly(oxyde de phénylène) modifiées par greffage d'un composé à insaturation oléfinique sur un poly(oxyde de phénylène), caractérisé en ce qu'on polymérise par greffage sur le poly(oxyde de phénylène) un amide organique qui contient une double liaison polymérisable, au-dessus de la température de fusion du poly(oxyde de phénylène), éventuellement en présence d'un initiateur radicalaire.

2. Procédé suivant la revendication 1, caractérisé en ce que l'amide organique est un (méth)acrylamide, un N-méthyl-(méth)acrylamide ou un N,N-dialkyl-I(méth)acrylamide avec des groupements alkyle en C₁–C₈.

3. Procédé suivant la revendication 1, caractérisé en ce que l'on polymérise par greffage à des températures comprises entre 230 et 350°C.

4. Procédé suivant la revendication 1, caractérisé en ce que l'on polymérise par greffage sans addition d'initiateur radicalaire.

5. Procédé suivant la revendication 1, caractérisé en ce que la polymérisation a lieu dans une zone de réaction munie d'éléments de pétrissage d'une vis d'extrusion.